# EUROPÄISCHE PATENTANMELDUNG

(11) **EP 0 581 988 A1**
(43) Veröffentlichungstag der Anmeldung: **09.02.1994**
(21) Anmeldenummer: 92113333.6
(22) Anmeldetag: 05.08.1992
(51) Int. Cl.: F16D 69/04, F16D 65/092, B61H 7/08

(54) **Bremsklotz und Verfahren zu seiner Herstellung sowie Magnetschienenbremse für Strassen- und Schienenfahrzeuge, insbesondere auch für Schienenfahrzeuge mit hohen und höheren Geschwindigkeiten**

(71) Anmelder: AlliedSignal Bremsbelag GmbH, D-21509 Glinde (DE)
(72) Erfinder: Valentin, Wolfgang, W-2056 Glinde (DE); Bauer, Heinz, W-2056 Glinde (DE)
(74) Vertreter: Richter, Werdermann & Gerbaulet

(57) **Zusammenfassung**

Um die Verbindung eines Trägerkörpers auf einem Reibwerkstoffblock für einen Bremsklotz für Straßen- und Schienenfahrzeuge sicherer zu gestalten, wird vorgeschlagen, den Reibwerkstoffblock (20) auf mehreren, nicht in einer Ebene liegenden aneinander grenzenden Flächenstücken von Teilen des gegossenen Trägerkörpers (10) kraft- und/oder formschlüssig zu umfassen.Dies läßt sich dadurch herstellen, daß der fertig gesinterte Körper in eine Gußform gelegt und vom Trägerwerkstoff umgossen wird.

## Beschreibung

Die Erfindung betrifft einen Bremsklotz, für Straßen- oder Schienenfahrzeuge, insbesondere auch für Schienenfahrzeuge mit hohen und höheren Geschwindigkeiten, bestehend aus ein- oder mehrteilig ausgebildeten, auf einem Trägerkörper befestigten Blöcken aus einem gepreßten Reibwerkstoff und ein Verfahren zu seiner Herstellung sowie eine Magnetschienenbremse. Derartige Bremsklötze sind beispielsweise aus der DE-U1 82 01 404 bekannt.

Für die Lebensdauer des Bremsklotzes und seine Funktionsfähigkeit ist die Verbindung zwischen dem Treibwerkstoffblock und dem Trägerkörper entscheidend. Diese Verbindung wird nach dem Stand der Technik durch Sintern oder durch Kleben hergestellt. Während die Sinter-Verbindungen häufig schon bei geringen Scherkräften aufbrachen, hatten die Klebverbindungen den Nachteil, daß sie Zwischenlagen erforderten, an deren übergang zum Reibwerkstoffblock Rißbildungen und/oder Korrosionen auftraten, so daß eine Unterrostung des Reibmaterialblockes kriechend von der Seite auftreten kann, die zu einer Beeinträchtigung der Bremswirkung und - im Extremfall - zu einem Ausfall des Bremsbelages führen könnte. Das Verkleben des Reibmaterials mit dem Trägerblech erfordert bei der Bremsbelagherstellung durch die Wärmebehandlung des Klebemittels auch relativ lange Standzeiten, was zu niedrigen Fertigungszahlen führt. Eine Verkürzung der Standzeiten der Wärmebehandlung des Klebemittels ist nur bei Inkaufnahme einer unzureichenden Haftverbindung möglich. Oftmals reicht auch die Rauhigkeit der zu verklebenden Oberflächen nicht aus, um eine hinreichende Haftung zu ermöglichen. Daher ist in der DE-U1-82 01 404 bereits vorgeschlagen worden, die Trägerplatte auf der dem Reibwerkstoffblock tragenden Seite mit einem aufgesinterten Halterungsbett aus einzelnen, mit dem Reibwerkstoffblock kraft- und formschlußbildenden Formkörpern mit Hinterschneidungen, Einziehungen od.dgl. zu versehen, auf dem der aufgepreßte Reibwerkstoff in Blockform unter Ausfüllung der Hinterschneidungen, Einziehungen od.dgl. der einzelnen Formkörper befestigt ist. Im praktischen Betrieb hat sich jedoch gezeigt, daß die Haftung nach wie vor unzureichend ist, da mechanische Kräfte sowie auftretende Schwingungen zu einem Aufbrechen der Verbindung führen. Die mikroskopisch kleinen und eine rauhe Oberfläche darstellenden Formkörper bestehen zudem aus anderem Material als der übrige Werkstoff des Halterungsbettes,weshalb sich insgesamt ein Bett in homogener Zusammensetzung bildet, das bei Belastungen zu Rißbildungen oder einem Ausbrechen der Formkörper neigt. Hinzu kommt, daß an der Verbindungsstelle mit einem Halterungsbett statt einer Verbindungsfläche zwei Verbindungsflächen geschaffen werden müssen, nämlich den übergang vom Reibwerkstoffkörper zum Halterungsbett und vom Halterungsbett zum Trägerkörper.

Es ist Aufgabe der vorliegenden Erfindung, einen Bremsklotz, ein Verfahren zu seiner Herstellung und eine Magnetschienenbremse gemäß der eingangs genannten Art zu schaffen, der bzw. das bzw. die eine verbesserte Haftung des Trägerkörpers an dem Reibwerkstoffblock erlaubt, ohne daß es zu einem Bruch des Materials an den Verbindungszonen durch mechanische Kräfte und auftretende Schwingungen kommt.

Diese Aufgabe wird durch einen Bremsklotz nach Anspruch 1 gelöst, der erfindungsgemäß dadurch gekennzeichnet ist, daß mindestens der Reibwerkstoffblock auf mehreren, nicht in einer Ebene liegenden, aneinandergrenzenden Flächenstücken von Teilen des gegossenen Trägerkörpers kraft- und formschlüssig umfaßt wird. Im Unterschied zu den nach dem Stand der Technik bekannten Lösungen wird nicht nur eine Verbindung zweier aneinanderliegender, gegebenenfalls aufgerauhter Flächen geschaffen, sondern eine Verbindung, welche den Reibwerkstoffblock an Seitenflächenstücken oder allseitig umfaßt. Die geometrisch einfachste Verbindung kann beispielsweise darin bestehen, daß der quaderförmige Bremsklotz an einer seiner Stirnflächen und an den hieran angrenzenden Seitenflächen ganz oder teilweise von dem Guß-Trägerkörper umfaßt wird. Die seitlichen Umfassungen dienen dann als Stützflächen zur Aufnahme von Scherkräften. Alternativ oder ergänzend hierzu ist es auch möglich, dem Reibwerkstoffblock und dem Gußträgerkörper an einer Stirnseite und/oder mindestens zwei gegenüberliegenden Seitenflächen Profilierungen in Form von langgestreckten Ausstülpungen zu geben, die entsprechend ausgeformt ineinandergreifen und einen natürlichen Formschluß des gegossenen Trägerkörpers um den Reibwerkstoffblock schaffen.

Weitere Ausgestaltungen der Erfindung sind in den Unteransprüchen beschrieben.

So kann der gegossene Trägerkörper an der Verbindungsstelle zum Reibwerkstoffblock auf mindestens zwei gegenüberliegenden Seiten langgestreckte Rippen oder Ausstülpungen jeweils mit Hinterschnitten aufweisen, die in entsprechend angepaßten Nuten oder Einziehungen am Reibwerkstoffblock kraft- und formschlüssig eingreifen. Eine spezielle Ausführungsform für eine solche kraft- und formschlüssige Verbindung ist eine schwalbenschwanzförmige Aufnahme, wie sie beispielsweise bei Führungen bekannt ist. Vorzugsweise weist hierbei der Reibwerkstoffblock an seiner Rückseite in Form einer breiten Rippe mit beidseitigen Hinterschneidungen den positiven Schwalbenschwanzteil auf, während der Trägerkörper eine entsprechend angepaßte negative Ausnehmung besitzt. Die betreffende Rippe oder andersartige Ausstülpungen mit Hinterschnitten wird bereits bei der Herstellung des Reibwerkstoffblockes mitgeformt, so daß diese Rippe zusammen mit dem übrigen Reibwerkstoffkörper ein homogenes Formteil bildet. Da der Trägerkörper mit seinem Profil bis in die Hinterschneidungen greift, wobei auch der Trägerkörper ein materialspezifisch homogenes Teil darstellt, wird allein schon durch die Außenprofilgestaltung ein Aufbrechen der Verbindungsstelle weitgehend ausgeschlossen.

Nach einer weiteren Ausgestaltung der Erfindung sind die Rippen oder Ausstülpungen einerseits und die entsprechend geformten Nuten oder Einziehungen andererseits allseitig an dem Trägerkörper oder Reibwerkstoffblock, jeweils ineinandergreifend, vorgesehen.

Wie bereits erwähnt, ist nach einer speziellen Ausgestaltung der Reibwerkstoffkörper an der der aktiven Bremsfläche abgewandten Verbindungsfläche und den sich hieran anschließenden Seitenflächen über eine vorgegebene Höhe vom Tragkörper umfaßt, wobei die Seitenflächen glatt oder ebenfalls mit einer Profilierung in Form einer Rippe mit Hinterschneidungen ausgestaltet werden können. Vorzugsweise schließen der Trägerkörper und der Reibwerkstoffblock an den Seiten oder an der Stirnfläche miteinander bündig ab.

Als Material werden für den Reibwerkstoffblock ein Sinterwerkstoff und/oder den Trägerkörper ein Grauguß, Sphäroguß oder Stahlguß verwendet.

Verfahrenstechnisch wird der Bremsklotz dadurch hergestellt, daß der Reibwerkstoffblock auf pulvermetallurgischem Wege nach dem Fertigsintern anschließend in eine Gußform gelegt und ganz oder teilweise so umgossen wird, daß eine kraft- und/oder formschlüssige Verbindung des so gegossenen Trägerkörpers zum Reibwerkstoffblock entsteht. Die vorbeschriebenen Profilgestaltungen in Form von Rippen oder anderen Ausstülpungen mit Hinterschneidungen oder auch Nuten oder Einziehungen werden vor dem Sintern , während des Sinterns oder nach dem Sintern in den Reibwerkstoffblock eingebracht. Durch den Guß des in die Gußmasse eingetauchten Reibwerkstoffblockes schließt sich der Trägerkörper formschlüssig im Bereich der Eintauchtiefe an das Profil des Reibwerkstoffblockes an, so daß nach dem Abkühlen eine feste Verbindung zwischen dem Reibwerkstoffblock und dem Trägerkörper besteht.

Vorzugsweise wird die Gießtemperatur kurzzeitig so groß gewählt, daß der Gießwerkstoff in die Randzonen des Reibwerkstoffblockes z.B. bis zu 20 µm diffundiert, um in dieser Zone eine atomare Diffusionsbindung zu erhalten. Hierdurch wird der Formschluß weiterhin verbessert. Der Vorteil des vorbeschriebenen Verfahrens besteht darin, daß die Fertigung weiter rationalisiert werden kann, da der ansonsten notwendige Sinterungsprozeß für das Befestigen des Reibwerkstoffblockes an dem Trägerblech oder Trägerkörper ebenso entfällt wie das Aufrauhen der Verbindungsflächen, Einfügen und Vorbehandeln von Zwischenlagen und Auftragen von etwaigen Verbindungsmitteln, wie Klebern oder Lot.

Des weiteren sieht die Erfindung eine Magnetschienenbremse, insbesondere für Schienenfahrzeuge mit hohen und höheren Geschwindkigkeiten, so wie diese u.a. von Hochgeschwindigkeitszügen gefahren werden, vor, bei der die der Schiene zugekehrten Abschnitte des Magnetkerns Reibwerkstoffblöcke aufweisen, die u.a. auch von Trägerkörperkraft und/oder formschlüssig umfaßt sind. Ausführungsbeispiele der Erfindung sind in den Zeichnungen dargestellt. Es zeigen
Fig. 1 eine perspektivische Ansicht eines Bremsklotzes aus einem Reibwerkstoff mit durch Umgießen erhaltenem Trägerkörper,
Fig. 2 eine Vorderansicht des Bremsklotzes nach Fig. 1,
Fig. 3 einen Schnitt nach der Linie III-III in Fig.1,
Fig. 4 in einer schaubildlichen Explosionsdarstellung den Trägerkörper und den Reibwerkstoffblock,
Fig. 5 einen senkrechten Schnitt einer weiteren Ausführungsform eines Bremsklotzes, bei dem der Reibwerkstoffblock seitlich von dem gegossenen Trägerkörper umgriffen wird,
Fig. 6 eine schaubildliche Ansicht einer Ausführungsform eines Bremsklotzes, bei dem der Reibwerkstoffblock von dem gegossenen Trägerkörper allseitig umgriffen ist,
Fig. 6A in einer schaubildlichen Ansicht eine weitere Ausführungsform eines Bremsklotzes mit mehreren einzelnen Reibwerkstoffblöcken, die von einem gegossenen Trägerkörper mehrseitig umgriffen sind,
Fig. 7 eine schematische Ansicht eines Schienenstückes sowie Bremsbacken einer Magnetschienenbremse eines Schienenfahrzeuges,
Fig. 8 eine Schienenfahrzeug-Bremsbacke einer Magnetschienenbremse im Bereich des Reibwerkstoffblockes in einer Teilschnittansicht,
Fig. 9 eine Draufsicht auf eine Bremsbacke einer Magnetschienenbremse von unten,
Fig. 10 eine Vorderansicht einer weiteren Ausführungsform eines Bremsklotzes mit einer Oberflächenprofilierung der dem Trägerkörper zugekehrten Wandfläche des Reibwerkstoffblockes,
Fig. 11 einen senkrechten Schnitt gemäß Linie XI-XI in Fig.10,
Fig. 12 einen vergrößerten senkrechten Schnitt durch einen Reibwerkstoffblock mit einem aufgebrachten Trägerblech mit beidseitig an den Trägerblechwandflächen aufgebrachten Halterungsbetten in Form von kugelförmigen Formkörpern vor dem Umgießen des Reibwerkstoffblockes,
Fig. 13 in einer Ansicht von oben ein Trägerblech mit einer weiteren Ausführungsform des aufgebrachten Halterungsbettes,
Fig. 14 einen senkrechten Schnitt gemäß Linie XIV-XIV in Fig. 13,
Fig. 15 in einer Schnittdarstellung entsprechend Fig.14 eine weitere Ausführungsform des aufgebrachten Halterungsbettes und
Fig. 16 in Details A,B und C verschiedene Ausgestaltungen der das Halterungsbett bildenden Greifelemente.

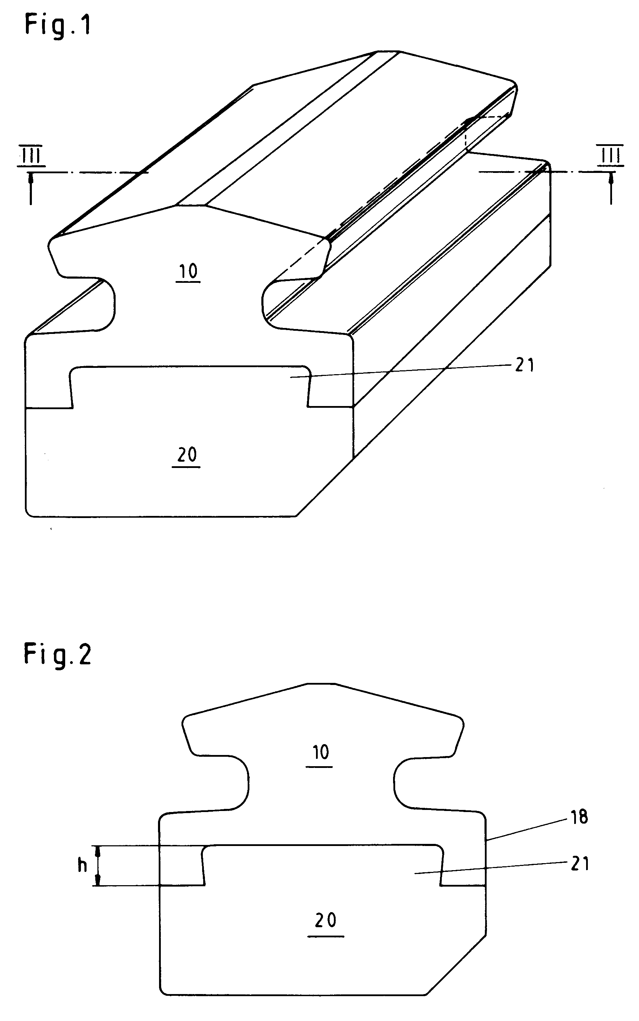

Der Bremsklotz nach Fig. 1 bis 4 besteht aus einem metallischen, gegossenen Trägerkörper 10 und dem als Reibbelag dienenden Reibwerkstoffblock 20. Der Trägerkörper 10 besitzt zur Befestigung an dem Aufnahmeteil des Fahrzeuges die nach dem Stand der Technik bekannte, im Querschnitt pilzförmige Formgebung. Auf der Verbindungsseite zum Reibwerkstoffblock 20 hin besitzt der Trägerkörper 10 eine rippenförmige Ausnehmung über seine gesamte Länge, worin form- und kraftschlüssig eine entsprechend geformte breite Rippe 21 des Reibwerkstoffblockes 20 eingreift.

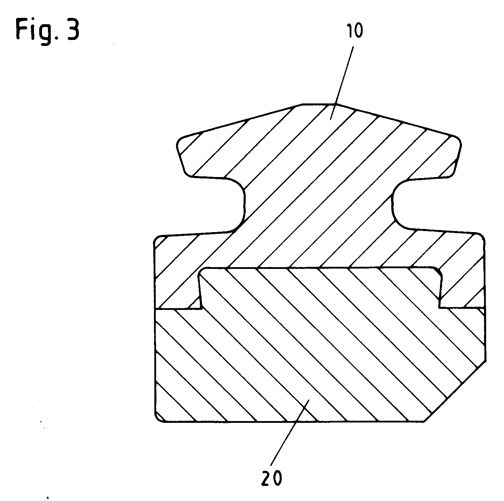

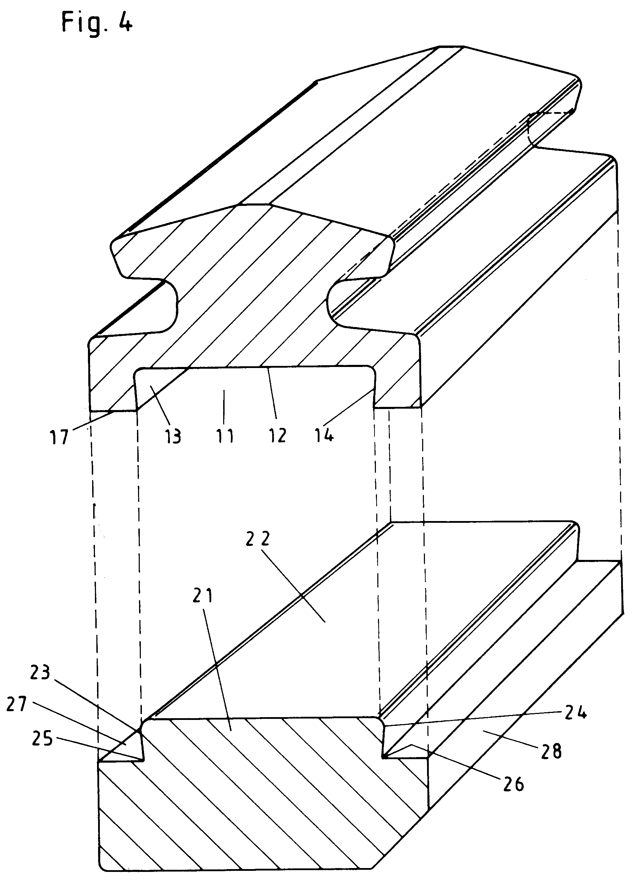

Die Rippe 21 ist im Querschnitt (s.Fig.3,4) trapezförmig ausgebildet, wobei die obere Seite bzw. Fläche 22 die größere Seite bzw. Fläche ist. Die Seitenflächen 23,24 können unter einem beliebigen Trapezwinkel gegenüber der Grundseite bzw. -fläche angeordnet sein, wobei der Winkel in Verbindung mit der jeweiligen Länge der Seitenflächen 23 und 24 so gewählt wird, daß ein Abziehen oder Ausbrechen des Reibwerkstoffblocks aus dem Trägerkörper wirksam verhindert wird. Wesentlicher Erfindungsgedanke sind jedoch die Hinterschnitte 25 und 26, die auch ungeradlinig , beispielsweise bei welligen Rippen oder andersartigen Profilgestaltungen, ausgeführt sein können. Die Gestaltung einer großflächigen Erhebung, wie in Form der Rippe 21, wird durch das Preßwerkzeug oder beim Sintern vorgegeben. Da der fertig gepreßte Reibwerkstoffblock 20 über die in Fig. 2 dargestellte Höhe h in den flüssigen Gießwerkstoff des Trägerkörpers eingetaucht und anschließend der Guß abgekühlt wird, liegt der Trägerkörper im Bereich der Eintauchtiefe h allseitig an dem Reibwerkstoffblock 20 an. Durch die gießtechnische Herstellung bedingt bilden sich somit entsprechend der Rippe 21 geformte nutenförmige Ausnehmungen 11 mit Stirnflächen 12 sowie Seitenflächen 13 und 14, die formschlüssig an den genannten Flächen 22 bis 24 des Reibwerkstoffblockes 20 bzw. der Rippe 21 anliegen. Entsprechendes gilt für die Stirnflächen 17 und 27 des Trägerkörpers 10 und des Reibwerkstoffblockes 20. In einer Abänderung der Erfindung kann jedoch auch der Reibwerkstoffblock 20 mit einer Nut versehen werden, worin nach dem Guß eine entsprechende Rippe des Trägerkörpers eingreift. In dem in den Fig. 1 bis 4 dargestellten Fall besitzen der Reibwerkstoffblock und der Trägerkörper jeweils eine gleiche Länge und gleiche Breite, weshalb die Außenflächen 18 und 28 ebenso eine einheitliche bündige Fläche bilden wie die aus Fig.2 ersichtliche Stirnseite.

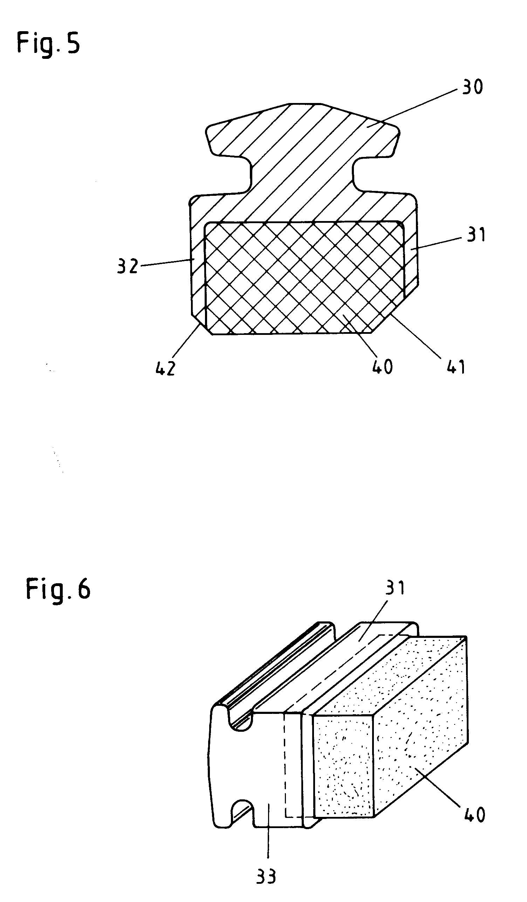

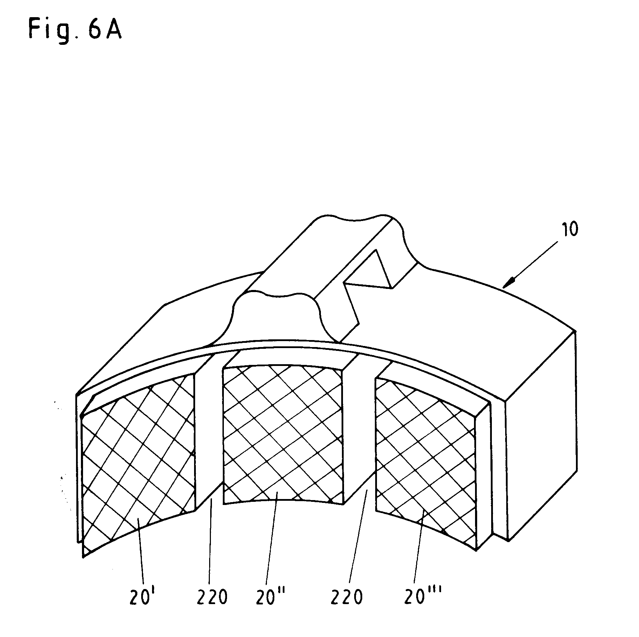

Während nach den Fig. 1 bis 4 beim dort dargestellten Bremsklotz der Trägerkörper 10 den Reibwerkstoffblock 20 nur im Bereich der Rippe 21 umgreift, wird der Reibwerkstoffblock 40 in der Ausführungsform nach Fig. 5 und 6 an seinen Seitenflächen ganz (Fig.5) oder teilweise (Fig.6) von den Seiten 31 und 32 eines Guß-Trägerkörpers 30 umgriffen. Der übergreifende Abschnitt kann auf zwei gegenüberliegenden Seiten 31 und 32 oder allseitig, wie anhand der Stirnseite 33 in Fig. 6 demonstriert, vorliegen. In jedem Fall besitzt der Trägerkörper 30 einen im wesentlichen quaderförmigen Hohlraum, in dem der Reibwerkstoffblock 40 ganz oder teilweise eingebettet ist. Die vorderen Kanten können je nach Bedarf, Zweck und wie Fig. 5 zu entnehmen, Schrägungen 41,42 aufweisen.

Nach der in Fig. 6A dargestellten Ausführungsform besteht der Bremsklotz ebenfalls aus einem metallischen, gegossenen Trägerkörper 10 mit mehreren, als Reibbelag dienenden Reibwerkstofflächen 20',20'',20''', die ohne Zwischenräume von dem Trägerkörper 10 gehalten und umgeben werden, wobei jedoch auch eine Anordnung der einzelnen Reibwerkstoffblöcke 20',20'',20''' in Abständen unter Ausbildung von Zwischenräumen 220 möglich ist. Beim Gießen des Trägerkörpers 10 können auch diese Zwischenräume 220 mit dem Material des Trägerkörpers 10 ausgefüllt sein.

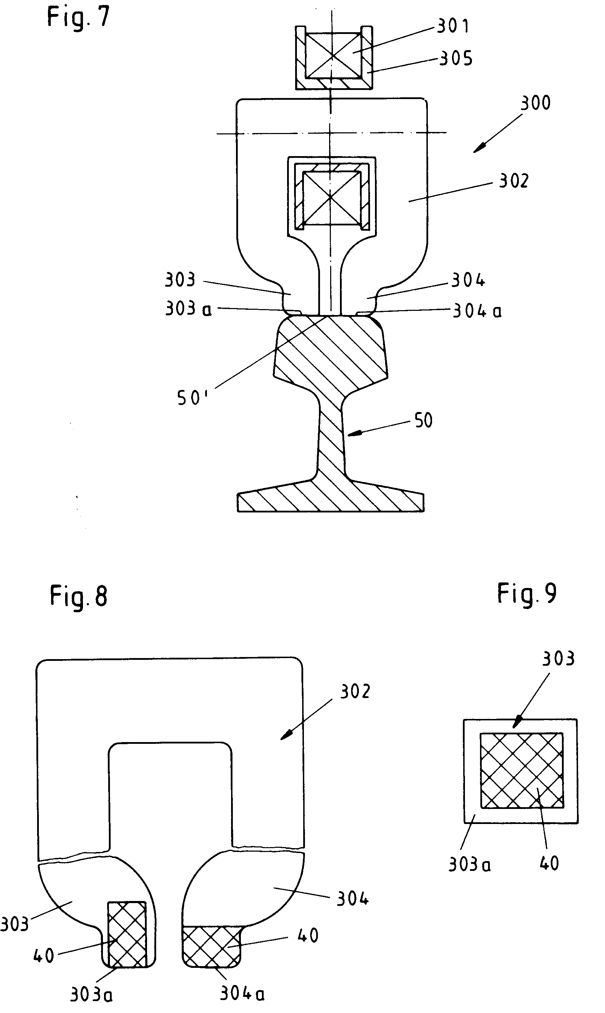

Bei Schienenfahrzeugen mit hohen und höheren Geschwindigkeiten kommen verstärkt Magnetschienenbremsen zum Einsatz, bei denen Reibungskräfte unmittelbar auf die Schiene übertragen werden. Derartige Magnetschienenbremsen 300 stellen im Prinzip einen Elektromagneten dar und bestehen aus einer in Richtung der Schiene 50 langgezogenen Spule 301 und hufeisenförmigen Magnetkernen 302 mit zusammengeführten und etwa parallel zueinander verlaufenden Schenkeln 303,304 mit auf dem Schienenkopf 50' aufliegenden Stirnflächen 303a,304a. Der in der Magnetspule 301, die von einem Spulenkörper 305 umgeben ist, fließende Gleichstrom bewirkt eine magnetische Spannung, die in dem Magnetkern 302 einen magnetischen Fluß erzeugt, der sich über dem Schienenkopf 50' schließt. Die Magnetkerne 302 sind gefertigt aus Baustahl oder Gußeisen mit Kugelgraphit oder aus einer Kombination beider Materialien. Die Anpreßkraft bei derartigen Magnetschienenbremsen wird hierbei durch einen zum Bremsen auf die Schienen abgesenkten Elektromagneten erzeugt. Durch Anlegen eines Induktionsstromes wird ein Magnetfeld ausgebildet, aufgrund dessen der Magnetkern 302 gegen die Schienen gezogen wird. In den Ausführungsformen nach Fig. 7 bis 9 sind Reibwerkstoffblöcke 40 dargestellt, die in den Schenkeln 303,304 des Magnetkernes 302 als Trägerkörper angeordnet sind und die mit Ausnahme der Stirnflächen 303a,304a von dem Material des Magnetkernes 302 allseitig umschlossen bzw. bei der Herstellung des Magnetkernes 302 umgossen werden. Jeder Reibwerkstoffblock 40 befindet sich damit vollständig inmitten eines jeden Schenkels 303,304 des Magnetkernes 302, was eine wirkungsvollere Magnetfeldausbildung und damit eine größere Anpreßkraft des Magnetkernes 302 auf die Schiene 50 ermöglicht. Nach einer weiteren Ausgestaltung sind die Reibwerkstoffblöcke 40 in den Schenkeln 303,304 des Magnetkerns 302 nicht vom Material des Magnetkerns 302 umschlossen, sondern stellen selbst die Schenkel 303,304 bzw. deren Endabschnitte dar. Die Schenkel 303,304 bestehen somit aus Reibwerkstoffblöcken mit einer Formgebung, die der des Magnetkerns 302 entspricht. Fig.8 zeigt einen der beiden Schenkel des Magnetkerns 302, wobei der Schenkel 304 aus einem Reibwerkstoffblock 40 besteht.

Das für den Reibwerkstoffblock 40 verwendete Sintermaterial weist metallische Anteile auf, um eine ausreichende Induktion, d.h. einen ausreichenden magnetischen Fluß zu ermöglichen. Die sich dabei ergebenden Vorteile bestehen darin, daß derart aufgebaute Magnetschienenbremsen verschleißresistenter sind. Das für die Reibwerkstoffblöcke eingesetzte Sintermaterial hat einen höheren Reibwert, der u.a. auch für die Bremskraft bestimmend ist. Des weiteren wird das Schienenmaterial geschont.

In allen dargestellten Fällen wird zunächst der Reibwerkstoffblock 20 durch Sintern hergestellt und anschliessend der Trägerkörper angegossen. Das Befestigen des Reibwerkstoffblockes 20 an einem gegossenen und der Form des Reibwerkstoffblockes angepaßten Trägerkörper kann auch über Schraubverbindungen oder über andere geeignete Verbindungen erfolgen.

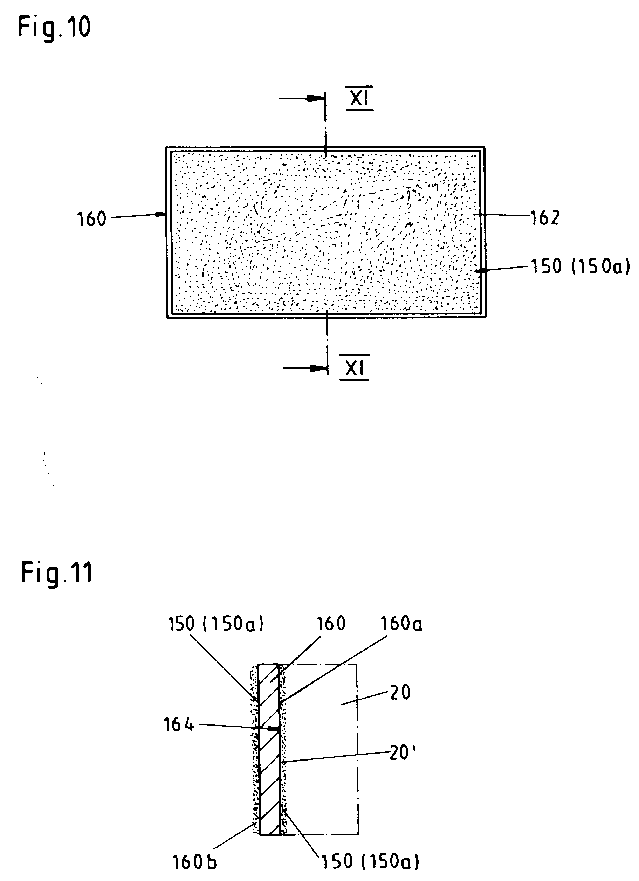

Der Reibwerkstoffblock 20 kann nach einer weiteren Ausführungsform an der dem Trägerkörper 10 zugekehrten Wandfläche vor dem Umgießen mit einer Oberflächenprofilierung in Form eines Halterungsbettes 150 versehen werden, um den Verbund zwischen dem Reibwerkstoffblock und dem gegossenen Trägerkörper zu verbessern. Dieses Halterungsbett 150 kann die verschiedensten geometrischen Formen, wie Kugelform od.dgl., aufweisen (Fig.10 und 11).

Des weiteren kann vor dem Umgießen des Reibwerkstoffblockes 20, also vor dem Gießen des Trägerkörpers 10, der Reibwerkstoffblock auf einem Trägerblech 160 angebracht sein, das auf seinen beiden Wandflächen 160a,160b mit einem Halterungsbett 150 versehen ist.

In den Fig. 10 bis 14 ist mit 160 ein in an sich bekannter Weise ausgebildetes Trägerblech aus metallischen oder anderen geeigneten Werkstoffen bezeichnet, auf dem ein angedeuteter Block 20 aus einer gepreßten Reibmaterialmischung angeordnet ist. Bei der Ausführungsform gemäß Fig. 10 und 11 weist das Trägerblech 160 auf der den Reibwerkstoffblock 20 tragenden Seite 160a ein Halterungsbett 150 als strukturell ausgebildete Oberfläche auf, die aus einer Grundschicht 150a von Formelementen oder Formkörpern 162 besteht, die bevorzugterweise aus der Materialmischung aus einem höher schmelzenden Anteil und einem niedriger schmelzenden Anteil derart gemischt, komprimiert und temperaturbehandelt sind, daß jeder einzelne Formkörper 162 Hinterschneidungen, Einziehungen u.dgl. 164 aufweist, wobei die Formkörper 162 auch aus jedem beliebigen metallischen Material bestehen können. Des weiteren ist auch die dem Reibwerkstoffblock 20 abgekehrte Wandfläche 160b mit einem Halterungsbett 150' versehen, das entsprechend dem Halterungsbett 150 ausgebildet ist.

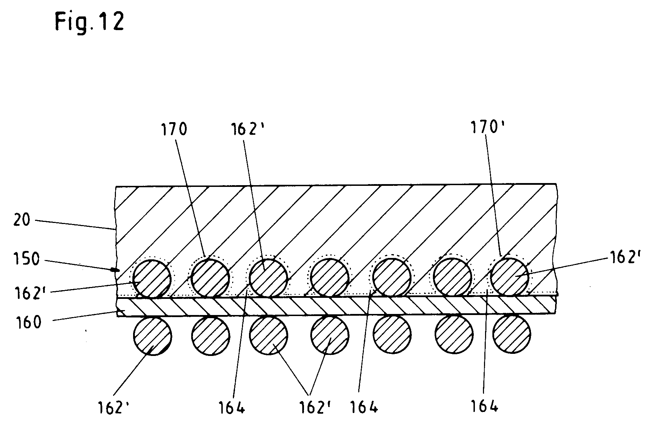

Bei dem in Fig. 12 gezeigten Ausführungsbeispiel besteht das Halterungsbett 150 aus auf das Trägerglech 160 aufgesinterten kugelförmigen Formkörpern 162', die im Befestigungsbereich Hinterschneidungen 164 bilden. Auf das Halterungsbett 150 ist z.B. ein galvanischer Überzug 170 aus Metall aufgebracht, der die einzelnen Formkörper 162' umgibt und der den von den Formkörpern 162' gebildeten Konturen angepaßt ist, wobei der Überzug 170 auch dem Verlauf der Hinterschneidungen, Einziehungen od. dgl. 164 folgt, so daß ein geschlossener metallischer Überzug erhalten wird; dadurch wird gleichzeitig ein guter Korrosionsschutz für das Trägerblech 160 geschaffen, das bevorzugterweise eine geringe Materialstärke aufweist. Der metallische Überzug 170 kann aus Kupfer, Silber, Zinn, Cadmium, Zink oder einem anderen geeigneten Metall bestehen. Der weitere Vorteil, den der galvanische Metallüberzug erbringt, liegt in einer genauen Maßhaltigkeit in Bezug auf die Dicke des Überzuges. Diese Maßhaltigkeit ist weder bei Überzügen aus einem Lack noch bei einer Pulverbeschichtung möglich. Hinzu kommt, daß der metallische Überzug in einer Gleichmäßigkeit auftragbar ist, die mit anderen Beschichtungsverfahren nicht erreichbar ist. Außerdem bleiben die Konturen des Halterungsbettes 150 voll erhalten, so daß trotz des metallischen Überzuges 170 zwischen dem aufgepreßten Reibwerkstoff und dem Rauhgrund ein hoher Kraft- und Formschluß besteht.

Neben einem Überzug 170 aus metallischen Werkstoffen kann auch als Überzug ein die gleichen Eigenschaftten aufweisender Kunststoff verwendet werden. Ein derartiger Überzug ist in Fig. 12 bei 170' angedeutet. Als Kunststoffe eignen sich insbesondere solche, die auch bei höheren Temperaturen beständig sind, so u.a. Silikonkautschuk, Trifluoräthylen, Polytetrafluoräthylen, Polysiloxane u.dgl..

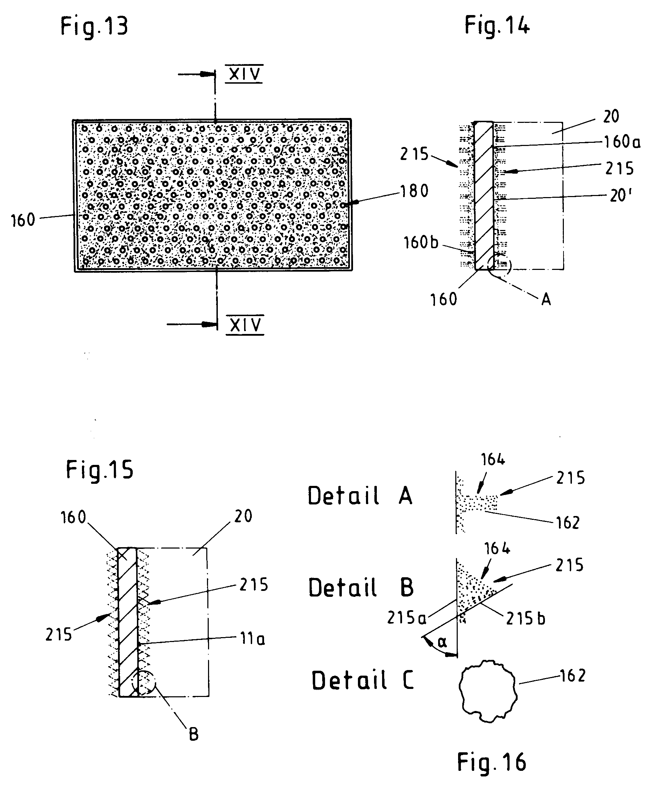

Die Reibmaterialmischung wird unter Zuhilfenahme eines entsprechenden Formkörpers auf das mit dem Halterungsbett 150 versehene Trägerblech 160 derart aufgepreßt, daß während des Preßvorganges die Reibmaterialmischung in die Zwischenräume zwischen die einzelnen Formelemente 162 (deren bizarre Oberfläche in Detail C in Fig. 16 angedeutet ist) und in diejenigen Räume einfließt, die von Hinterschneidungen, Einziehungen u.dgl. 164 gebildet sind. Auf diese Weise erfolgt vermittels der Formelemente 162 eine innige Verbindung zwischen dem sich verformenden Reibwerkstoffblock 20 und dem Halterungsbett 150, die sich ineinander verkrallen. Durch die Materialeigenschaften erfolgt jedoch auch eine derartige Verformung des Halterungsbettes 150 und von deren Grundschicht 150a so, daß der Reibwerkstoff die nicht vom Halterungsbett ausgefüllten Oberflächenteile der Reibmaterialaufnahmefläche 20' beaufschlagt, so daß eine vollflächige Ausfüllung der Reibmaterialaufnahmefläche 20' erfolgt, so daß sich hier keine oder nur eine sehr geringe Anzahl von Freiflächen und Freiräumen ergibt, wodurch ein Eindringen von Feuchtigkeit und die damit verbundenen Korrosionsmöglichkeiten vermieden werden (Fig.11).

Eine weitere Ausführungsformn ist in den Fig. 13 und 14 dargestellt, bei der der Grundaufbau dem der Fig.10 und 11 entspricht, und auf der Grundschicht 150a Greifelemente 15 in Form zylindrischer oder kegelstumpfförmiger Säulen oder als Kegelstumpf ausgebildet sind, wie im Detail A angedeutet ist. Hierbei ergeben sich die Greifelemente 180 in einer Makrobetrachtung als Säulen; sie sind in sich als bizarre Strukturen mit Hinterschneidungen, Einziehungen u.dgl. 164 ausgebildet.

In Fig. 15 ist eine weitere Ausführungsform dargestellt, bei der in Abweichung zu Fig.14 die Greifelemente 215 als Pyramiden mit einer dreieckigen, viereckigen oder mehrechigen Grundfläche ausgebildet sind. Um hier optimale Halterungs- und Verschleißeigenschaften zu erhalten, ist dabei vorgesehen, daß der Pyramidenwinkel zwischen der Pyramidengrundfläche 215a und der Pyramidenseite 215b etwa 60 Grad beträgt, wie in Detail B (Fig.16) angedeutet ist.

Das Aufbringen des metallischen Überzugs kann auf galvanischem oder thermischen Wege oder durch Aufdampfen erfolgen. Es besteht auch die Möglichkeit, vor dem Aufrauhungsprozeß bzw. vor dem Aufbringen des Halterungsbettes die Trägerplatte mit einem metallischen Überzug, z.B. aus Kupfer, zu versehen. Aus dem metallischen Überzug wird dann der Rauhgrund herausgearbeitet.

Besteht das Trägerblech 160 aus einem dünnen Blech, dann ist dieses mit einem Profil, z.B. verrippt, versehen, so daß die Eigensteifigkeit des Trägerbleches 160 erhöht wird.

Weist der Reibwerkstoffblock 20 Profilierungen, wie eine Rippe 21 auf (Fig. 1 und 2), dann ist das Trägerblech 160 mit einer entsprechenden Profilgestaltung versehen.

Der Bremsklotz bzw. der Reibwerkstoffblock in seiner erfindungsgemäßen Ausgestaltung ist sowohl bei Straßen- und Schienenfahrzeugen als auch bei allen anderen Fortbewegungsmitteln, wie z.B. Flugzeug, einsetzbar, bei denen für die Bremseinrichtungen Bremsklötze bzw. Reibwerkstoffblöcke benötigt werden.

## Patentansprüche

1. Bremsklotz, insbesondere für Straßen- und Schienenfahrzeuge, bestehend aus ein- oder mehrteilig ausgebildeten, auf einem Trägerkörper (10,30) befestigten Blöcken (20,40) aus einem gepreßten Reibwerkstoffblock, dadurch gekennzeichnet, daß mindestens ein Reibwerkstoffblock (20,40) auf mehreren, nicht in einer Ebene liegenden, aneinander grenzenden Flächenstücken (23,24) von Teilen (13,14,31,32,33) des gegossenen Trägerkörpers (10,30) kraft- und/oder formschlüssig umfaßt wird.

2. Bremsklotz nach Anspruch 1, dadurch gekennzeichnet, daß ein Reibwerkstoffblock (20) von einem Trägerkörper (10) kraft- und/oder formschlüssig umfaßt wird.

3. Bremsklotz nach Anspruch 1, dadurch gekennzeichnet, daß mehrere, bevorzugterweise drei in Reihe nebeneinanderliegend angeordnete Reibwerkstoffblöcke (20',20'',20''') von einem Trägerkörper (10) kraft- und/oder formschlüssig umfaßt werden.

4. Bremsklotz nach Anspruch 3, dadurch gekennzeichnet, daß die drei Reibwerkstoffblöcke (20',20'',20''') unter Ausschluß von Zwischenräumen nebeneinanderliegend in dem Trägerkörper (10) angeordnet sind.

5. Bremsklotz nach Anspruch 3, dadurch gekennzeichnet, daß die drei Reibwerkstoffblöcke (20',20'',20''') unter Ausbildung von Zwischenräumen (220) in gleichen oder ungleichen Abständen voneinander in dem Trägerkörper (10) angeordnet sind.

6. Bremsklotz nach Anspruch 5, dadurch gekennzeichnet, daß die Zwischenräume (220) zwischen den einzelnen Reibwerkstoffblöcken (20', 20'',20''') mit dem Material des Trägerkörpers (10) ausgegossen sind.

7. Bremsklotz nach einem der Ansprüche 1 bis 6, dadurch gekennzeichnet, daß der gegossene Trägerkörper (10) an der Verbindungsstelle zum Reibwerkstoffblock (20) auf mindestens zwei gegenüberliegenden Seiten langgestreckte Rippen oder Ausstülpungen jeweils mit Hinterschnitten aufweist, die in entsprechend angepaßten Nuten oder Einziehungen am Reibwerkstoffblock (20) kraft- und formschlüssig eingreifen.

8. Bremsklotz nach Anspruch 7, dadurch gekennzeichnet, daß die Verbindung eine schwalbenschwanzförmige Aufnahme (21,11) ist.

9. Bremsklotz nach Anspruch 8, dadurch gekennzeichnet, daß der Reibwerkstoffblock (20) an seiner Rückseite in Form einer breiten Rippe (21) mit beidseitigen Hinterschneidungen (25,26) den positiven Schwalbenschwanzteil aufweist.

10. Bremsklotz nach einem der Ansprüche 1 bis 9, dadurch gekennzeichnet, daß die Rippen (21) oder Ausstülpungen einerseits und die entsprechend geformten Nuten (11) oder Einziehungen andererseits allseitig an dem Trägerkörper (10,30) oder Reibwerkstoffblock (20,40) vorgesehen sind.

11. Bremsklotz nach einem der Ansprüche 1 bis 10, dadurch gekennzeichnet, daß der Reibwerkstoffblock (20) an der der aktiven Bremsfläche abgewandten Verbindungsfläche und den sich hieran anschließenden Seitenflächen über eine vorgebbare Höhe (h) vom Trägerkörper (10) umfaßt wird.

12. Bremsklotz nach einem der Ansprüche 1 bis 11, dadurch gekennzeichnet, daß der Reibwerkstoffblock (20,40) aus einem Sinterwerkstoff und/oder der Trägerkörper (10,30) aus Grauguß, Sphäroguß oder Stahlguß besteht.

13. Bremsklotz nach einem der Ansprüche 1 bis 12, dadurch gekennzeichnet, daß der Reibwerkstoffblock (20,40) auf der dem Trägerkörper (10,30) zugekehrten Wandfläche mit einer Oberflächenprofilierung, wie Halterungsbett od.dgl. (150) zur Festigkeitserhöhung der Verbindung zwischen dem Reibwerkstoffblock (20,40) und dem Trägerkörper (10,30) versehen ist.

14. Bremsklotz nach einem der Ansprüche 1 bis 13, dadurch gekennzeichnet, daß der Reibwerkstoffblock (20) auf einem Trägerblech (160) befestigt ist, das auf der den Reibwerkstoffblock (20) tragenden Seite oder auf beiden Seiten je ein aufgesintertes Halterungsbett (150) aus einzelnen mit dem Reibwerkstoffblock kraft- und formschlußbildenden Formkörpern (162;162') mit Hinterschneidungen, Einziehungen od.dgl. (164) als Rauhgrund aufweist, wobei auf dem Halterungsbett (150) der aufgepreßte Reibwerkstoffblock (20) unter Ausfüllung der Hinterschneidungen, Einziehung od.dgl. (164') der einzelnen Formkörper (162;162') befestigt ist.

15. Bremsklotz nach einem der Ansprüche 1 bis 14, dadurch gekennzeichnet, daß vor dem Aufpressen des Reibwerkstoffes auf das Trägerblech (160) mit oder ohne dem aufgesinterten oder anderweitig ausgebildeten Halterungsbett (150) ein auf galvanischem, thermischen oder auf einem anderen geeigneten Wege erzeugter metallischer Überzug (170) als Korrosionsschutz für das Trägerblech (160) aufgebracht ist, wobei der metallische Überzug (170) aus Kupfer, Silber, Zinn, Cadmium, Zink, Chrom oder einem anderen geeigneten Metall besteht.

16. Bremsklotz nach einem der Ansprüche 1 bis 15, dadurch gekennzeichnet, daß vor dem Aufpressen des Reibwerkstoffes auf das Trägerblech (160) mit dem aufgesinterten Halterungsbett (150) ein nichtmetallischer Überzug (170') , z.B. aus einem hochtemperaturbeständigen Kunststoff, als Korrosionsschutz für das Trägerblech (160) aufgebracht ist.

17. Bremsklotz nach einem der Ansprüche 1 bis 16, dadurch gekennzeichnet, daß das Halterungsbett (150) aus einem Materialgemisch aus einem Anteil (A) mit niedrigerem Schmelzpunkt und einem Anteil (B) mit einem höheren Schmelzpunkt besteht.

18. Bremsklotz nach einem der Ansprüche 1 bis 17, dadurch gekennzeichnet, daß der niedrig schmelzende Anteil (A) ein niedrig schmelzendes Metall wie Zinn od.dgl. oder eine niedrig schmelzende Legierung wie Bronze, Messing od.dgl. ist.

19. Bremsklotz nach einem der Ansprüche 1 bis 18, dadurch gekennzeichnet, daß der höher schmelzende Anteil (B) aus Sand, Keramikpulver od.dgl. besteht.

20. Bremsklotz nach einem der Ansprüche 1 bis 19, dadurch gekennzeichnet, daß der Schmelzpunkt des höher schmelzenden Anteils (B) unter dem Schmelzpunkt des Trägerblechs (160) liegt.

21. Bremsklotz nach einem der Ansprüche 1 bis 20, dadurch gekennzeichnet, daß der niedrig schmelzende Anteil (A) aus etwa 30% Bronze und der höher schmelzende Anteil (B) aus etwa 70% Fe-Pulver besteht.

22. Bremsklotz nach Anspruch 21, dadurch gekennzeichnet, daß die verwendete Bronze einen Anteil von 10% Zinn aufweist.

23. Bremsklotz nach einem der Ansprüche 1 bis 22, dadurch gekennzeichnet, daß das aufgesinterte Halterungsbett (150) aus einer das Trägerblech (160) im Bereich der Reibmaterialaufnahmefläche (20') vollflächig oder teilflächig überdeckenden Grundschicht (150a) aus einzelnen, kraft- und formschlußbildenden Formelementen (13), die Hinterschneidungen, Einziehungen od.dgl. (164) aufweisen, besteht.

24. Bremsklotz nach Anspruch 23, dadurch gekennzeichnet, daß auf der Grundschicht (150a) jeweils einen Abstand zueinander aufweisende Greifelemente (180;215) ausgebildet sind.

25. Bremsklotz nach Anspruch 24, dadurch gekennzeichnet, daß jedes Greifelement (180;215) in Form einer zylindrischen Säule, kegelstumpfförmigen Säule oder als Kegelstumpf ausgebildet ist.

26. Bremsklotz nach Anspruch 24, dadurch gekennzeichnet, daß jedes Greifelement (215) in Form einer Pyramide mit einer dreieckigen, viereckigen oder mehreckigen Grundfläche ausgebildet ist.

27. Bremsklotz nach Anspruch 24 oder 25, dadurch gekennzeichnet, daß der Kegel- oder Pyramidenwinkel (α) zwischen der Grundfläche und einer Seite etwa 60 Grad beträgt.

28. Bremsklotz nach einem der Ansprüche 1 bis 27, dadurch gekennzeichnet, daß das Halterungsbett (150) neben dem Anteil (A) und dem Anteil (B) einen Anteil (C) aus Kohlenstoff aufweist.

29. Verfahren zur Herstellung des Bremsklotzes nach einem der Ansprüche 1 bis 28, dadurch gekennzeichnet, daß der Reibewerkstoffblock (20) fertig gesintert wird, anschließend in eine Gußform gelegt und ganz oder teilweise so umgossen wird, daß eine kraft- und/oder formschlüssige Verbindung des so gegossenen Trägerkörpers (10,30) zum Reibwerkstoffblock (20,40) entsteht.

30. Verfahren nach Anspruch 29, dadurch gekennzeichnet, daß die Gießtemperatur kurzzeitig so groß gewählt wird, daß der Gießwerkstoff in den Randzonen des Reibwerkstoffblockes (20,40) bis 20 µm diffundiert.

31. Magnetschienenbremse, insbesondere für Schienenfahrzeuge mit hohen und höheren Geschwindigkeiten, insbesondere auch für Hochgeschwindigkeitsschienenfahrzeuge, mit einer in Schienenlängsrichtung langgezogenen Spule (301) und hufeisenförmigen Magnetkernen (302), wobei jeder Magnetkern (302) zwei dem Schienenkopf zugekehrte, etwa parallel zueinander verlaufende Schenkel (303,304) mit auf dem Schienenkopf aufliegenden Stirnflächen (303a,304a), aufweist, dadurch gekennzeichnet, daß jeder der beiden Schenkel (303,304) des Magnetkernes (302) einen Reibwerkstoffblock (40) trägt, der vom Material des Magnetkernes (302) umgossen ist und der in die Stirnfläche (303a;304a) des Schenkels (303;304) mündet.

32. Magnetschienenbremse, insbesondere für Schienenfahrzeuge mit hohen und höheren Geschwindigkeiten, insbesondere auch für Hochgeschwindigkeitsschienenfahrzeuge, mit einer in Schienenlängsrichtung langgezogenen Spule (301) und hufeisenförmigen Magnetkernen (302), wobei jeder Magnetkern (302) zwei dem Schienenkopf zugekehrte, etwa parallel zueinander verlaufende Schenkel (303, 304) mit auf dem Schienenkopf aufliegenden Stirnflächen (303a,304a), aufweist, dadurch gekennzeichnet, daß jeder der beiden Schenkel (303,304) des Magnetkernes (302) in seinem Endbereich aus einem Reibwerkstoffblock (40) besteht.

33. Magnetschienenbremse nach einem der Ansprüche 31 oder 32, dadurch gekennzeichnet, daß der Reibwerkstoffblock (40) metallische Eigenschaften aufweist.

34. Magnetschienenbremse nach einem der Ansprüche 31 oder 32, dadurch gekennzeichnet, daß die Schenkel (303, 304) des Magnetkernes (302) nach einem der Ansprüche 1 bis 28 hergestellte Bremsklötze aufweisen.
